# EUROPÄISCHE PATENTSCHRIFT

(11) **EP 1 027 777 B1**
(45) Veröffentlichungstag und Bekanntmachung des Hinweises auf die Patenterteilung: **31.07.2002**
(21) Anmeldenummer: 98961022.5
(22) Anmeldetag: 19.10.1998
(51) Int. Cl.: H04B 7/26, H04B 1/707

(54) **VERFAHREN ZUR ÜBERTRAGUNG VON INFORMATIONEN ÜBER EINE FUNKSCHNITTSTELLE**
METHOD FOR TRANSMITTING INFORMATION VIA A RADIO INTERFACE
PROCEDE POUR LA TRANSMISSION D'INFORMATIONS PAR L'INTERMEDIAIRE D'UNE INTERFACE RADIO

(30) Priorität: 27.10.1997 DE 19747378
(43) Veröffentlichungstag der Anmeldung: 16.08.2000
(73) Patentinhaber: SIEMENS AKTIENGESELLSCHAFT, 80333 München (DE)
(72) Erfinder: BAHRENBURG, Stefan, D-81477 München (DE); MAYER, Jürgen, D-67105 Schifferstadt (DE); EMMER, Dieter, D-82110 Germering (DE); BAIER, Paul, Walter, D-67661 Kaiserslautern (DE); SCHLEE, Johannes, D-89134 Blaustein (DE); WEBER, Tobias, D-67731 Otterbach (DE)
(86) Internationale Anmeldenummer: DE9803059
(87) Internationale Veröffentlichungsnummer: WO9922468

(56) Entgegenhaltungen:
- WO-A-95/33313
- WO-A-97/05707
- JUNG P ET AL: "A JOINT DETECTION CDMA MOBILE RADIO SYSTEM CONCEPT DEVELOPED WITHIN COST 231" PROCEEDINGS OF THE VEHICULAR TECHNOLOGY CONFERENCE, CHICAGO, JULY 25 - 28, 1995, Bd. 1, Nr. CONF. 45, 25. Juli 1995, Seiten 469-473, XP000550217 INSTITUTE OF ELECTRICAL AND ELECTRONICS ENGINEERS

## Beschreibung

Die Erfindung betrifft ein Verfahren zur Übertragung von Informationen über eine Funkschnittstelle, das Übertragungskanäle bereitstellt, in denen jeweils gleichzeitig Nutzinformationen mehrerer Verbindungen zwischen Mobilstationen und zumindest einer Basisstation enthalten und gemäß einer verbindungsindividuellen Feinstruktur unterscheidbar sind.

Der Aufbau von digitalen Funk-Kommunikationssystemen ist in J.Oudelaar, "Evolution towards UMTS", PIMRC 94, 5th IEEE International Symp. on Personal, Indoor and Mobile Radio Communications, The Hague, NL, 18.-22. September 1994, S.852-856, und M.Lenti, H.Hageman, "Paging in UMTS", RACE Mobile Telecommunications Workshop, Vol. 1, Amsterdam, NL, 17.-19. Mai 1994, S.405-410, gezeigt.

Das gegenwärtig existierende Mobilfunksystem GSM (Global System for Mobile Communications) ist ein Funk-Kommunikationssystem mit einer TDMA-Komponente zur Teilnehmerseparierung (time division multiple access). Gemäß einer Rahmenstruktur werden Informationen der Teilnehmerverbindungen zwischen Mcbilstationen und Basisstationen in Zeitschlitzen übertragen. Die Übertragung erfolgt blockweise. Man kann zwischen Übertragungskanälen für Nutzinformationen - wie Sprache, Daten oder Signalisierung - und Übertragungskanälen für Organisationsinformationen - wie Angaben zum Aufenthaltsbereich, zur Funkzelle, zur Kanalstruktur und zu Optionen, die innerhalb der Zelle unterstützt werden - unterscheiden.

Aus der Offenlegungsschrift DE 42 10 305 A1 ist ein Verfahren zur Datenübertragung mit veränderlichem Verkehrsaufkommen bekannt, bei dem ein bestimmter Zeitabschnitt eines Datenstroms in Teile aufgeteilt wird, deren Anzahl vom Verkehrsaufkommen abhängt. Die verschiedenen Teile sind dabei mit mehr oder weniger vielen - z.B. zueinander orthogonalen Kodes - kodiert, sodaß ein gemischtes TDMA/CDMA-System (CDMA, code division multiple access) entsteht, bei dem gleichzeitig Nutzinformationen mehrerer Verbindungen zwischen Mobilstationen und jeweils einer Basisstation übertragen werden.

In der WO 97/05707 ist ein Verfahren zur Verminderung von Gleichkanalstörungen in zellular aufgebauten JD-CDMA-Funksystemen beschrieben, das die Merkmale des Oberbegriffs des Anspruchs 1 aufweist.

Der Erfindung liegt die Aufgabe zugrunde, ein Verfahren bereitzustellen, das in einem Funk-Kommunikationssystem der oben beschriebenen Art wirtschaftliche Sender- und Empfängerstrukturen ermöglichen. Diese Aufgabe wird durch das Verfahren mit den Merkmalen des Patentanspruchs 1 gelöst. Weiterbildungen der Erfindung sind den Unteransprüchen zu entnehmen.

Ein Funk-Kommunikationssystem, das Übertragungskanäle bereitstellt, in denen jeweils gleichzeitig Nutzinformationen mehrerer Verbindungen zwischen Mobilstationen und zumindest einer Basisstation enthalten und gemäß einer verbindungsindividuellen Feinstruktur unterscheidbar sind, wird erfindungsgemäß zumindest in bestimmten Funkbereichen nach Art eines Gleichwellensystems mit einer einzigen Frequenz für die gleichzeitige Übertragung von Organisationsinformationen von Basisstationen zu Mobilstationen betrieben.

Dadurch ergeben sich für alle Empfangseinrichtungen die Vorteil eines einheitlichen Zugriffs - z.B. der Mobilstationen - in einem Funkbereich oder im gesamten Funkversorgungsgebiet auf ledigliche eine einzige Frequenz und der Verzicht auf eine Frequenzsynchronisation beim Empfangen der Organisationsinformationen von den Sendeeinrichtungen - z.B. den Basisstationen. Die hohe Frequenzeffizienz, die der Betrieb des Funk-Kommunikationssystems als Gleichwellensystem bewirkt, erfordert empfangsseitig keine Suchprozeduren (frequency tracking) hinsichtlich der Sendefrequenz. Die Sendeeinrichtungen können die aufbereiteten Organisationsinformationen schnellstmöglich an alle Empfangseinrichtungen jederzeit über die eine Frequenz, die einen Broadcast-Betrieb an alle Empfangseinrichtungen ermöglicht, unabhängig von den zur Nutzinformationsübertragung benutzten Frequenzen der Übertragungskanäle des Funk-Kommunikationssystems senden.

Insbesondere bei Anwendung des Gleichwellensystems auf ein TD/CDMA-System zur Informationsübertragung ergeben sich Vorteile hinsichtlich der Flexibilität und des universellen Einsatzes, da obiges System empfangsseitig in der Lage ist, Anteile der Impulsantworten verschiedener Sender, die dieselben Informationen senden, zu überlagern und zur Kanalschätzung heranzuziehen. Das JD-Verfahren (joint detection) zur gemeinsamen Detektion von Informationen kann eine Kombination aus den Impulsantworten mehrerer Sender so anwenden, als ob eine lange Impulsantwort von einem einzigen Sender stamme.

Der Betrieb des Funk-Kommunikationssystems als Gleichwellensystem - zumindest in bestimmten Funkbereichen des Gesamtversorgungsgebiets - erlaubt einem Netzbetreiber, seine Angebotsbandbreite für Broadcastdienste oder broadcastähnliche Dienste, wie z.B. Videoübertragung, Online-Vertrieb von Waren, lokale Kommunikationsdienste usw., in Abwärtsrichtung zu den Teilnehmern zu erweitern und dafür nur eine einzige Frequenz zum Abstrahlen der Informationen zu spendieren.

Als günstig hat sich erwiesen, bei Anwendung des TD/CDMA-Verfahrens unabhängige Spreizkodes für die Datensymbole und für die Trainingssequenz der jeweils zur Übertragung der Organisationsinformationen verwendeten Funkblöcke zu verwenden. Damit ist die Detektion empfangsseitig und die Kodierung sendeseitig der auf der einen Frequenz abgestrahlten Informationen besonders einfach.

Vorteilhaft istes insbesondere, wenn alle Basisstationen im Funkbereich des Funk-Kommunikationssystems die Organisationsinformationen mit derselben Frequenz aussenden.

Die Sendeeinrichtung gemäß der Erfindung zum Senden von Informationen über eine Funkschnittstelle eines Funk-Kommunikationssystems weist eine Signalverarbeitungseinrichtung und eine Steuereinrichtung zum Steuern der Signalverarbeitungseinrichtung auf. Die Signalverarbeitungseinrichtung bereitet Nutzinformationen und Organisationsinformationen für die Übertragung über die Funkschnittstelle vor und bewirkt - gesteuert durch die Steuereinrichtung - , daß das Funk-Kommunikationssystem zumindest in bestimmten Funkbereichen nach Art eines Gleichwellensystems mit einer einzigen Frequenz für die gleichzeitige Übertragung der Organisationsinformationen zu Mobilstationen betrieben wird. Darüber hinaus weist die Sendeeinrichtung eine Übertragungseinrichtung auf, die ein die Organisationsinformationen tragendes Sendesignal für eine hochfrequente Abstrahlung auf der einen Frequenz moduliert.

Die Empfangseinrichtung gemäß der Erfindung zum Empfangen von Informationen über eine Funkschnittstelle eines Funk-Kommunikationssystems weist eine Hochfrequenzeinrichtung und eine Koppeleinrichtung zum Verbinden der Hochfrequenzeinrichtung mit einer Signalverarbeitungseinrichtung auf. Die Hochfrequenzeinrichtung dient zum Demodulieren von Empfangssignalen, während die Signalverarbeitungseinrichtung Organisationsinformationen verarbeitet, die in dem zumindest in bestimmten Funkbereichen nach Art eines Gleichwellensystems betriebenen Funk-Kommunikationssystem mit einer einzigen Frequenz hochfrequent abgestrahlt werden.

Im folgenden wird die Erfindung anhand eines Ausführungsbeispiels bezugnehmend auf zeichnerische Darstellungen näher erläutert. Dabei zeigen
- FIG 1: das Blockschaltbild eines als Gleichwellensystem betriebenen Funk-Kommunikationssystems,
- FIG 2: eine schematische Darstellung der Rahmenstruktur der Funkschnittstelle bei einem TD/CDMA-System,
- FIG 3: das Blockschaltbild einer Sendeeinrichtung, und
- FIG 4: das Blockschaltbild einer Empfangseinrichtung.

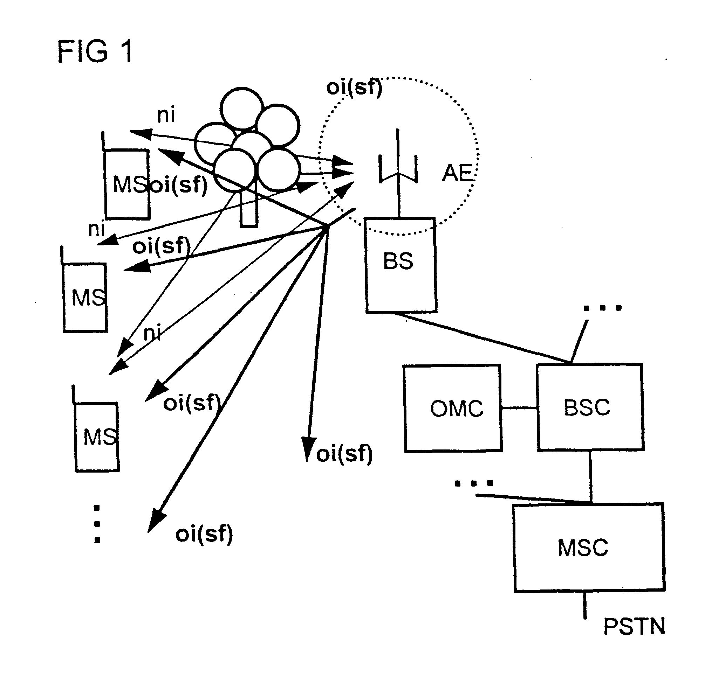

Das in FIG 1 dargestellte Funk-Kommunikationssystem entspricht in seiner Struktur einem bekannten GSM-Mobilfunksystem, das eine Mehrzahl von Mobilvermittlungsstellen MSC, Basisstationssteuerungen BSC, Basisstationen BS und Mobilstationen MS sowie zumindest ein Operations- und Wartungszentrum OMC aufweist. Die Mobilvermittlungsstellen MSC sind untereinander vernetzt bzw. stellen den Zugang zu einem anderen Kommunikationsnetz, z.B. einem Festnetz PSTN, her. Weiterhin sind diese Mobilvermittlungsstellen MSC jeweils mit zumindest einer Basisstationssteuerung BSC verbunden. Jede Basisstationssteuerung BSC ermöglicht wiederum eine Verbindung zu mindestens einer Basisstation BS. Eine solche Basisstation BS ist eine Funkstation, die über eine Funkschnittstelle eine oder mehrere Funkverbindungen zu Mobilstationen MS aufbauen, abbauen und aufrechthalten kann. Das beispielsweise an eine Basisstationssteuerung BSC angeschlossene Operations- und Wartungszentrum OMC realisiert Kontroll- und Wartungsfunktionen für das Mobilfunknetz bzw. für deren Netzeinrichtungen. Die Funktionalität dieser Struktur ist nicht auf das dargestellte GSM-System beschränkt, sondern auch auf andere Funk-Kommunikationssysteme übertragbar, sodaß die Erfindung auch dort zum Einsatz kommen kann.

In FIG 1 sind beispielhaft drei Funkverbindungen zur Übertragung von Nutzinformationen ni, z.B. Sprach- oder Dateninformationen oder Signalisierungsinformationen, zwischen drei Mobilstationen MS und einer Basisstation BS in der Abwärtsrichtung wie in der Aufwärtsrichtung dargestellt. Die Übertragung der Nutzinformationen ni erfolgt somit auf Punkt-zu-Punkt-Verbindungen. Die Basisstation BS ist mit einer Antenneneinrichtung AE verbunden, die z.B. aus drei Einzelstrahlern besteht. Jeder Einzelstrahler strahlt vorzugsweise gerichtet in einen Sektor der durch die Basisstation BS versorgten Funkzelle. Grundsätzlich ist auch eine größere Anzahl von Einzelstahlern - bei Einsatz adaptiver Antennen - möglich, die auf die räumliche Position der Mobilstation MS abgestimmte Abstrahlungskeulen erzeugen. Damit ist für die Übertragung der Nutzinformationen ni ein Kapazitätsgewinn - adaptiver Antennengewinn - durch eine höhere Anzahl von Punkt-zu-Punkt-Verbindungen bei gleichbleibender Bandbreite erzielbar. Die funktechnischen Ressourcen werden damit gut ausgenutzt. Die Kommunikationsverbindungen - unabhängig davon, welche Informationen sie enthalten - zwischen der Basisstation BS und den Mobilstationen MS unterliegen einer Mehrwegeausbreitung, die durch Reflektionen beispielsweise an Gegenständen zusätzlich zum direkten Ausbreitungsweg hervorgerufen werden.

Außer den Nutzinformationen ni sind von der Basisstation BS auch Organisationsinformationen oi den Mobilstationen MS auf Punkt-zu-Mehrpunkt-Verbindungen - gegebenenfalls andauernd - zur Verfügung zu stellen. Diese Organisationsinformationen oi umfassen beispielsweise Grundinformationen in einem bestimmten Funkbereich, wie z.B. Informationen zur Identifikation des Netzes, Informationen über den Aufenthaltsbereich (LA, location area), aber auch Informationen über die in diesem Funkbereich verfügbaren Übertragungskanäle der Basisstationen BS und über die Frequenzen der benachbarten Funkbereiche. Die Organisationsinformationen können auch andere Informationen umfassen, die von der Basisstation BS an viele oder alle oder alle Mobilstationen MS im Funkbereich oder im gesamten Funkversorgungsbereich des Systems gesendet werden sollen. Dies sind beispielsweise Informationen, die im Rahmen von Broadcastdiensten oder broadcastähnlichen Dienste, wie z.B. Videoübertragung, Online-Vertrieb von Waren, lokale Kommunikationsdienste usw., in Abwärtsrichtung zum Teilnehmer zu senden sind. Daher wird erfindungsgemäß das Funk-Kommunikationssystem in Funkbereichen - maximal bis zu Abdeckung des Gesamtgebiets - nach Art eines Gleichwellensystems betrieben. Dabei werden die Organisationsinformationen oi in Abwärtsrichtung mit einer einzigen Frequenz sf gleichzeitig übertragung. Alle Sendeeinrichtungen in den Basisstationen BS senden und alle Empfangseinrichtungen in den Mobilstationen MS empfangen die Signale mit derselben, speziellen Frequenz sf - wie bei einem Broadcast-Betrieb. Dies ermöglicht einen einheitlichen Zugriff und eine hohe Frequenzeffizienz, da die Empfangseinrichtungen sich nicht mehr - wie bisher - auf die jeweilige Frequenz der Informationsübertragung aufsynchronisieren müssen, sondern nur noch auf dem Übertragungskanal dieser ausgewählten Frequenz mitzuhören brauchen. Dies spart empfangsseitig die Suchprozeduren für die zur Übertragung benutzten, unterschiedlichen Frequenzen und erleichtert den Empfang der Informationen. Das Aussenden der Organisationsinformationen oi erfolgt vorzugsweise über einen an alle Mobilstationen MS gerichteten Kontrollkanal. Alle Einzelstrahler der Antenneneinrichtung AE bewirken eine gleichzeitig Abstrahlung der Organisationsinformationen oi.

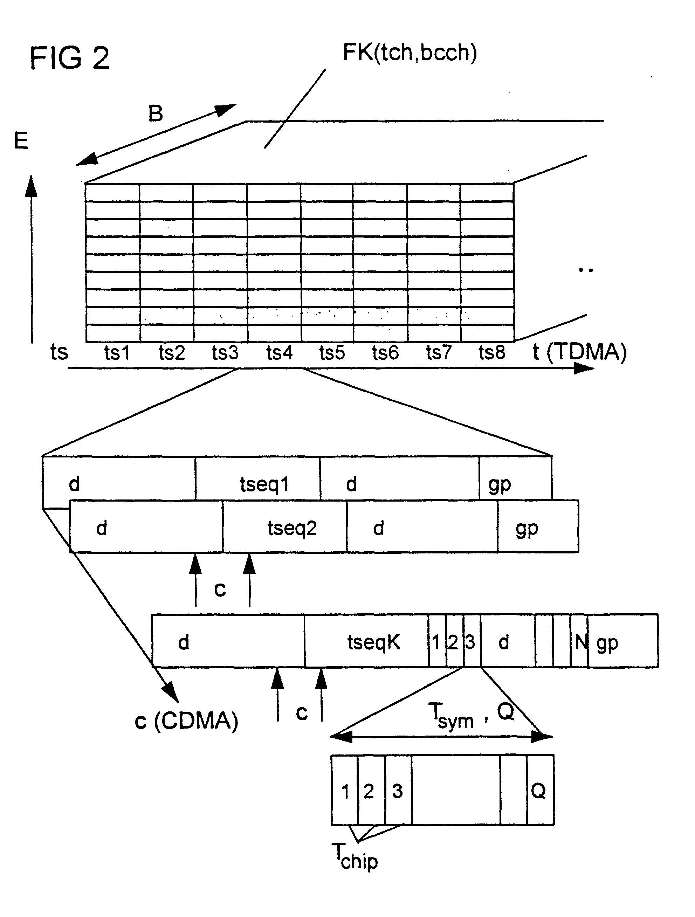

Die Rahmenstruktur der Funkübertragung in einem TD/CDMA-System, das bevorzugt den Betrieb als Gleichwellensystem zuläßt, ist aus FIG 2 ersichtlich. Gemäß einer TDMA-Komponente ist eine Aufteilung eines breitbandigen Frequenzbereiches B - mit z.B. B= 1,6 MHz - in mehrere Zeitschlitze ts, beispielsweise acht Zeitschlitze ts1 bis ts8 vorgesehen. Jeder Zeitschlitz ts innerhalb des Frequenzbereiches B bildet einen Frequenzkanal FK. In einem Frequenzkanal tch, der zur Nutzinformationsübertragung vorgesehen ist, werden Informationen mehrerer Verbindungen in Abwärtsrichtung wie in Aufwärtsrichtung in Funkblöcken übertragen. In einem Frequenzkanal bcch, der zur Organisationsinformationsübertragung vorgesehen ist, werden die Informationen nur in Abwärtsrichtung in Funkblöcken übertragen Diese Funkblöcke zur weisen Abschnitte mit Daten d auf, in die Abschnitte mit empfangsseitig bekannten Trainingssequenzen tseq1...tseqK eingebettet sind. Die Daten d sind verbindungsindividuell mit einer Feinstruktur, einem Teilnehmerkode c, gespreizt, so daß empfangsseitig beispielsweise K Verbindungen mit Nutzinformationen durch diese CDMA-Komponente separierbar sind. Für die Übertragung der Organisationsinformationen werden voneinander unabhängige Kodes für die Datensymbole d und für die Trainingssequenzen tseql... tseqK benutzt. Die Vorteile des TD/CDMA-Verfahrens, das eine gemeinsame Detektion (joint detection) anhand der Impulsantworten mehrerer Signalquellen vorsieht, können für den Gleichwellenbetrieb ausgenutzt werden.

Die Spreizung der einzelnen Symbole der Daten d bewirkt, daß innerhalb der Symboldauer T_{sym} Q Chips der Dauer T_{chip} übertragen werden. Die Q Chips bilden dabei den verbindungsindividuellen Teilnehmerkode c bei der Übertragung der Nutzinformationen. Weiterhin ist innerhalb des Zeitschlitzes ts eine Schutzzeit gp zur Kompensation unterschiedlicher Signallaufzeiten der Verbindungen vorgesehen. Hat die Trainingssequenz die Länge 243 Chip, lassen sich Summenimpulsantworten der Länge 122 Chip empfangsseitig schätzen. Die verbleibenden 121 Chip sind für Interferenzen des ersten Datenblocks reserviert. Die 122 Chip haben die Länge 56.3 µsec. Abzüglich 10 µsec für die Impulsantwort bleiben 46.3 µsec Ausbreitungsverzögerung im Gleichwellensystem übrig. In einem homogen aufgebauten zellularen Funk-Kommunikationssystem, in dem die Funkzellen etwa die gleiche Größe aufweisen, sind empfangsseitig nur die Heimat-Funkzelle der Basisstation und die benachbarten Funkzellen bezüglich der Ausbreitungsverzögerung von Relevanz. Befindet man sich nahe an den Zellmitten, ist die maximale Verzögerung von den Nachbarzellen erreicht. Für die Verzögerung von 46.3 µsec ergibt sich ein maximaler Zellabstand von 13.9 km.

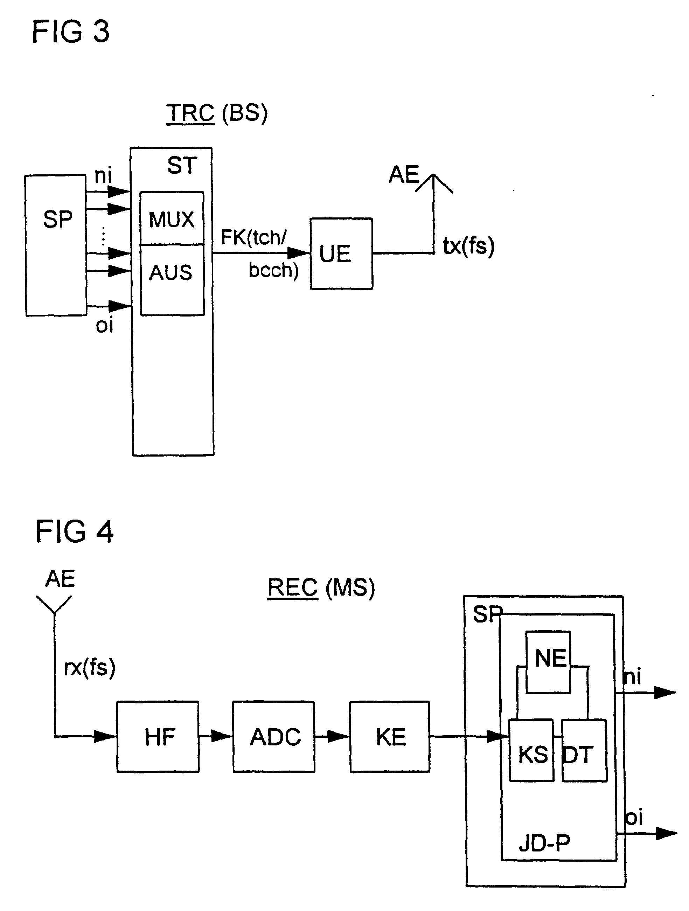

FIG 3 zeigt den prinzipiellen Aufbau einer Sendeeinrichtung, wie sie z.B. in einer Basisstation BS des als Gleichwellensystem betriebenen Funk-Kommmunikationssystems nach FIG 1 einsetzbar ist. Die Sendeeinrichtung weist eine Signalverarbeitungseinrichtung SP, beispielsweise einen digitalen Signalprozessor, sowie eine Steuereinrichtung ST mit Kombinationseinheit MUX und Auswahleinheit AUS auf. Die Kombinationseinheit MUX dient zum Verknüpfen der Signale der Nutzinformationen ni bzw. der Signale der Organisationsinformationen oi, die von der Signalverarbeitungseinrichtung SP für die Übertragung in Abwärtsrichtung vorbereitet und bereitgestellt wurden. Die Auswahleinheit AUS teilt den Frequenzkanal FK für reine Nutzinformationsübertragung - Kanal tch - oder den Frequenzkanal FK für die Übertragung der Organisationsinformationen oi- den Kontrollkanal bcch - mit der hierfür vorgesehenen einzigen Frequenz - entsprechend dem Broadcast-Betrieb - zu.

In einer Multiplexeinrichtung der Kombinationseinheit MUX werden die Teilnehmersignale von mehreren - im vorliegenden Beispiel von maximal acht - Kommunikationsverbindungen einem Zeitschlitz zugeordnet. Durch die Spreizung der Nutzinformationen ni in der Signalverarbeitungseinrichtung SP mit den zugeordneten Spreizkodes entstehen Signale, die in der Kombinationseinheit MUX zu einem gemeinsamen breitbandigen Signal überlagert werden. Eine an die Steuereinrichtung ST angeschaltete Übertragungseinrichtung UE bewirkt eine Umsetzung des jeweils auszusendenden Signals in ein analoges hochfrequentes Signal, das - moduliert und verstärkt als Sendesignal tx über die Antenneneinrichtung AE hochfrequent mit der Frequenz fs gemäß dem Broadcast-Betrieb ausgestrahlt wird.

Eine Struktur der Empfangseinrichtung REC, wie sie z.B. in einer Mobilstation MS des als Gleichwellensystem betriebenen Funk-Kommmunikationssystems nach FIG 1 einsetzbar ist, zeigt FIG 4. Von einer Antenneneinrichtung AE der Mobilstation MS empfangene Empfangssignale rx mit der Frequenz fs werden in einer Hochfrequenzeinheit HF, die mit der Übertragungseinrichtung UE der Sendeeinrichtung in der Basisstation BS korrespondiert, verstärkt, ins Basisband umgesetzt und demoduliert. In einem Analog/Digital-Wandler ADC werden die Empfangssignale in Symbole mit diskretem Wertevorrat umgewandelt, beispielsweise digitalisiert. Eine Koppeleinrichtung KE verbindet den Analog/Digital-Wandler ADC mit einer Signalverarbeitungseinrichtung SP, die als digitaler Signalprozessor einen JD-Prozessor JD-P zur Ausgabe der Nutzinformationen ni und der Organisationsinformationen oi nach dem JD-Verfahren (joint detection) aufweist. Dabei umfasst der JD-Prozessor JD-P einen Kanalschätzer KS sowie einen JD-Detektor DT, der über eine Nachführeinheit NE mit dem Kanalschätzer KS verbunden ist. Die JD-Algorithmen im Detektor liefern Anteile von Impulsantworten von verschiedenen Sendequellen, versehen sie jeweils mit einem Gewichtungsfaktor und kombinieren sie zu einer Summenimpulsantwort.

## Patentansprüche

1. Verfahren zur Übertragung von Informationen über eine Funkschnittstelle eines Funk-Kommunikationssystems, das Basisstationen und Mobilstationen aufweist,
bei dem Übertragungskanäle (FK) bereitgestellt werden, in denen jeweils gleichzeitig Nutzinformationen (ni) mehrerer Verbindungen zwischen mehreren der Mobilstationen (MS) und zumindest einer der Basisstationen (BS) enthalten und gemäß einer verbindungsindividuellen Feinstruktur unterscheidbar sind,
**dadurch gekennzeichnet,**
**daß** das Funk-Kommunikationssystem in zumindest einem Teilbereich des gesamten Funkversorgungsgebietes nach Art eines Gleichwellensystems, dass heißt mit einer einzigen Frequenz (sf), für die Übertragung von weiteren Informationen (oi) in einem Broadcasting-Betrieb betrieben wird, in dem mehrere der Basisstationen (BS) dieselben weiteren Informationen (oi) gleichzeitig mit derselben, einzigen Frequenz (sf) zu mehreren der Mobilstationen (MS) übertragen.

2. Verfahren nach Anspruch 1,
bei dem die mit der einzigen Frequenz (sf) übertragenen weiteren Informationen (oi) Organisationsinformationen oder Informationen für einen Broadcastdienst sind.

3. Verfahren nach Anspruch 1 oder 2, bei dem
das Funk-Kommunikationssystem eine TDMA-Komponente mit durch Zeitschlitze (ts1...) gebildeten Übertragungskanälen (FK) sowie eine CDMA-Komponente mit individuellen Spreizkodes (c) zur Unterscheidung der Nutzinformationen (ni) mehrerer Verbindungen als verbindungsindividuelle Feinstruktur aufweist.

4. Verfahren nach Anspruch 3, bei dem
die Informationen in jeweils aus Datensymbolen (d) und einer Trainingssequenz (tseq) gebildeten Funkblöcken übertragen werden, wobei zur Übertragung der weiteren Informationen (oi) voneinander unabhängige Kodes für die Datensymbole (d) und für die Trainingssequenz (tseq) verwendet werden.

5. Verfahren nach einem der vorhergehenden Ansprüche, bei dem das Aussenden der weiteren Informationen (oi) über einen an alle Mobilstationen (MS) gerichteten Kontrollkanal (BCCH) erfolgt.

6. Verfahren nach einem der vorhergehenden Ansprüche, bei dem das JD-Verfahren zur gemeinsamen Detektion der simultan mit der einen Frequenz gesendeten weiteren Informationen (oi) empfangsseitig benutzt wird.

7. Verfahren nach Anspruch 6, bei dem
die Basisstationen (BS) zueinander derart angeordnet sind, daß die Impulsantworten aus dem eigenen Funkbereich und deren benachbarten Funkbereichen bei der gemeinsamen Detektion überlagert werden.

8. Verfahren nach Anspruch 7, bei dem
die Basisstationen (BS) bis zu einem maximalen Abstand voneinander angeordnet werden.

## Claims

1. Method for transmitting information via a radio interface in a radio communications system which has base stations and mobile stations,
in which transmission channels (FK) are provided, which each at the same time contain user information (ni) for a number of connections between a number of the mobile stations (MS) and at least one of the base stations (BS) and can be distinguished on the basis of a connection-specific fine structure,
**characterized**
**in that** the radio communications system is operated in a broadcasting mode in at least one sub area of the entire radio supply region in the manner of a simultaneous broadcasting system, that is to say at a single frequency (sf), for the transmission of further information (oi), in which broadcasting mode a number of the base stations (BS) transmit the same further information (oi) at the same time at the same single frequency (sf) to a number of the mobile stations (MS).

2. Method according to Claim 1,
in which the further information (oi) which is transmitted at the single frequency (sf) is organization information or information for a broadcast service.

3. Method according to Claim 1 or 2, in which
the radio communications system has a TDMA component with transmission channels (FK) which are formed by time slots (ts1...), and a CDMA component with individual spread codes (c) in order to distinguish between the user information (ni) from a number of connections as a connection-specific fine structure.

4. Method according to Claim 3, in which
the information is transmitted in radio blocks, which are each formed from data symbols (d) and a training sequence (tseq), with mutually independent codes for the data symbols (d) and for the training sequence (tseq) being used for transmitting the further information (oi).

5. Method according to one of the preceding claims, in which
the further information (oi) is transmitted via a control channel (BCCH) which is directed to all the mobile stations (MS).

6. Method according to one of the preceding claims, in which
the JD method is used for joint detection at the receiving end of the further information (oi) which is transmitted simultaneously at the one frequency.

7. Method according to Claim 6, in which
the base stations (BS) are arranged with respect to one another such that the impulse responses from their own radio area and from their adjacent radio areas are superimposed in the joint detection process.

8. Method according to Claim 7, in which
the base stations (BS) are arranged up to a maximum distance apart from one another.

## Revendications

1. Procédé pour la transmission d'informations par l'intermédiaire d'une interface radio d'un système de radiocommunications comprenant des stations de base et des stations mobiles, consistant à mettre à disposition des canaux de transmission (FK) dans lesquels, simultanément, des informations utiles (ni) de plusieurs liaisons entre plusieurs desdites stations mobiles (MS) et au moins une desdites stations de base (BS) sont contenues et peuvent être différenciées selon une structure fine individuelle pour chaque liaison, **caractérisé en ce que** le système de radiocommunications, dans une partie au moins de l'ensemble de la zone de couverture radio, est exploité à la manière d'un système sur onde commune, c'est-à-dire à une seule fréquence (sf), pour la transmission d'autres informations (oi) en mode radiodiffusion, dans lequel plusieurs des stations de base (BS) transmettent simultanément les mêmes autres informations (oi) sur la même seule fréquence (sf) à plusieurs des stations mobiles (MS).

2. Procédé selon la revendication 1, dans lequel les autres informations (oi) transmises sur la seule fréquence (sf) sont des informations d'organisation ou des informations pour un service de radiodiffusion.

3. Procédé selon la revendication 1 ou 2, dans lequel le système de radiocommunications comporte une composante TDMA avec des canaux de transmission (FK) constitués par des créneaux temporels (ts1 ...) ainsi qu'une composante CDMA avec des codes individuels extensibles (c) pour la différenciation des informations utiles (ni) de plusieurs liaisons, comme structure fine individuelle pour chaque liaison.

4. Procédé selon la revendication 3, dans lequel les informations sont transmises dans des blocs radio constitués chacun de symboles de données (d) et d'une séquence d'entraînement (tseq), pour la transmission des autres informations (oi) étant utilisés des codes indépendants les uns des autres pour les symboles de données (d) et pour la séquence d'entraînement (tseq).

5. Procédé selon l'une des revendications précédentes, dans lequel l'émission des autres informations (oi) s'effectue par l'intermédiaire d'un canal de contrôle (BCCH) adressé à toutes les stations mobiles (MS).

6. Procédé selon l'une des revendications précédentes, dans lequel on utilise, côté réception, le procédé JD pour la détection commune des autres informations (oi) émises simultanément sur ladite une fréquence.

7. Procédé selon la revendication 6, dans lequel les stations de base (BS) sont disposées de telle sorte les unes par rapport aux autres que les réponses impulsionnelles provenant de la propre zone radio et de leurs zones radio voisines se superposent lors de la détection commune.

8. Procédé selon la revendication 7, dans lequel les stations de base (BS) sont disposées jusqu'à une distance maximale les unes des autres.
